## Europäisches Patentamt

## European Patent Office

## Office européen des brevets

(11) Publication number: **0 179 489**
**B1**

# EUROPEAN PATENT SPECIFICATION

(45) Date of publication of patent specification: **16.01.91**

(51) Int. Cl.⁵: **C 01 B 31/30**

(21) Application number: **85113611.9**

(22) Date of filing: **25.10.85**

(54) A process for producing acicular particles containing an iron carbide.

(30) Priority: **25.10.84 JP 224967/84**

(43) Date of publication of application:
**30.04.86 Bulletin 86/18**

(45) Publication of the grant of the patent:
**16.01.91 Bulletin 91/03**

(84) Designated Contracting States:
**BE DE FR GB IT NL**

(56) References cited:
**EP-A-0 123 318**
**US-A-3 885 023**
**US-A-4 122 216**

(73) Proprietor: **DAIKIN INDUSTRIES, LIMITED**
**No. 1-12-39, Umeda Kita-ku**
**Osaka-shi Osaka-fu (JP)**

(72) Inventor: **Okamura, Kazuo**
**1-34, Nakano Kita 1-chome**
**Itami-shi Hyogo-ken (JP)**
Inventor: **Kitamura, Ikuo**
**62-9, Motoyashiki-cho Otsuka**
**Yamashina-ku Kyoto-shi Kyoto-fu (JP)**
Inventor: **Aomi, Hideki**
**33-604, 3-ban Saiwai-cho 2-chome**
**Naniwa-ku Osaka-shi Osaka-fu (JP)**
Inventor: **Koyama, Satoshi 32-503, 11-ban**
**Zuiko 4-chome Higashiyodogawa-ku**
**Osaka-shi Osaka-shi (JP)**
Inventor: **Tokunaga, Katsushi**
**5-27, Takawashi 3-chome**
**Habikino-shi Osaka-fu (JP)**

(74) Representative: **Barz, Peter, Dr. et al**
**Patentanwälte Dr. V. Schmied-Kowarzik Dipl.-**
**Ing. G. Dannenberg Dr. P. Weinhold Dr. D. Gudel**
**Dipl.-Ing. S. Schubert Dr. P. Barz**
**Siegfriedstrasse 8**
**D-8000 München 40 (DE)**

## Description

The invention relates to a process for producing acicular particles containing an iron carbide.

Applicant has filed patent applications based on the finding that acicular particles containing iron carbide are produced by contacting acicular iron oxyhydroxide or acicular iron oxide with CO or a mixture of CO and $H_2$ at 250 to 400°C, and that these particles are chemically stable, have high coercive force and are useful for the magnetic material of a magnetic recording medium (JP—A—60-071509, JP—A—60-108309, JP—A—60-127212 and JP—A—60-155522). Although $\gamma$-$Fe_2O_3$ is easily available among the starting iron compounds, particles obtained therefrom are low in iron carbide content and have the disadvantage of being inferior as regards their magnetic characteristics.

US—A—3 885 023 discloses preparing pure iron carbide ($Fe_3C$) by treating ferric oxide ($Fe_2O_3$) with CO at a temperature of 500 to 550°C.

An object of the invention is to provide a process for producing particles having a high iron carbide content and excellent magnetic characteristics from an easily available $\gamma$-$Fe_2O_3$.

The invention provides a process for producing acicular particles containing an iron carbide, which comprises treating $\gamma$-$Fe_2O_3$ with an alkaline compound or coating it with a cobalt compound, and contacting the treated $\gamma$-$Fe_2O_3$ with CO or a mixture of CO and $H_2$ at a temperature of 250 to 400°C.

$\gamma$-$Fe_2O_3$ is, for example, any product prepared by heating $\alpha$-FeOOH, $\beta$-FeOOH or $\gamma$-FeOOH at about 200 to about 350°C, followed by dehydration, $\gamma$-$Fe_2O_3$ prepared by heating $\alpha$-, $\beta$- or $\gamma$-FeOOH at about 300 to about 600°C to produce $\alpha$-$Fe_2O_3$, reducing the $\alpha$-$Fe_2O_3$ to $Fe_3O_4$ and oxidizing the $Fe_3O_4$ at about 300 to about 400°C to compact the crystals, and others. $\gamma$-$Fe_2O_3$ can be one prepared by dehydrating $\alpha$-, $\beta$- or $\gamma$-FeOOH having a surface pH of at least 5.

The starting $\gamma$-$Fe_2O_3$ can have an average axial ratio of at least 3, preferably 3 to 20, and an average particle size (long axis) of usually up to 5 µm, preferably 0.1 to 2 µm, most preferably 0.1 to 1.0 µm. As will be described later, the acicular particles produced are slightly smaller than, but almost unchanged from, the starting material in average axial ratio and in average particle size, so that the acicular particles of the invention in general preferably have such sizes as already stated.

The starting $\gamma$-$Fe_2O_3$ to be used for the process for producing acicular particles according to the invention may have added thereto a small amount or small amounts of a compound, such as oxide or carbonate of copper, magnesium, manganese or nickel, silicon oxide, potassium salt, sodium salt, etc., as long as the starting material chiefly comprises $\gamma$-$Fe_2O_3$.

In the invention, $\gamma$-$Fe_2O_3$ is used as treated with an alkali compound or as coated with a cobalt compound.

The alkali treatment can be conducted in a conventional manner and, for example, by contacting $\gamma$-$Fe_2O_3$ with an aqueous solution of sodium hydroxide, potassium hydroxide, ammonium hydroxide or similar alkaline compound (e.g., with an aqueous solution having a pH of at least 8, preferably at least 10), stirring for 30 minutes to 1 hour when required, filtering and drying the mixture.

The cobalt-coating can also be conducted according to a known method and, for example, by dispersing $\gamma$-$Fe_2O_3$ in an aqueous solution of a cobalt salt (e.g., a diluted solution of 0.1 to 10% by weight) with stirring at room temperature or with heating, render the dispersion to alkaline with addition of an aqueous solution of an alkaline compound, stirring for 30 minutes to 1 hour when required, filtered and drying the dispersion.

The starting iron compound can be used as coated with a sintering-preventing agent as disclosed in JP—A—60-141611. Examples of useful agents are silicon compounds, boron compounds, aluminum compounds, aliphatic carboxylic acids or salts thereof, phosphorus compounds, titanium compounds, etc.

In the process of the invention, CO or a mixture of CO and $H_2$ can be used as it is or in diluted form. Examples of diluents are $N_2$, argon, helium, etc. When the mixture of CO and $H_2$ is used, the mixing ratio of $CO/H_2$ is suitably selected, but is preferably 1/0.05 to 1/5 by volume. The dilution ratio is suitably selected but is preferably about 1.1 to about 10 times (by volume). The contact temperature, contact time, gas flow rate and other conditions depend, for example, on the production history, average axial ratio, average particle size and specific surface area of $\gamma$-$Fe_2O_3$. The preferred contact temperature is about 250 to about 400°C, more preferably about 300 to about 380°C. The preferred contact time is about 1 to about 12 hours. The preferred gas flow rate (excluding diluent) is about 1 to about 1000 ml S.T.P./min, more preferably about 5 to about 500 ml S.T.P./min, per gram of the starting $\gamma$-$Fe_2O_3$. The contact pressure inclusive of that of the diluent is usually 1.01 to 2.03 bar (1 to 2 atm) although this is not limitative.

The particulate material obtained by the present process is in the form of generally uniform acicular particles when observed under an electron microscope. The particles are present as primary particles and have the same acicular particulate form as the starting particles of acicular iron oxyhydroxide or acicular iron oxide. The acicular particles obtained by the process are found to contain carbon by elementary analysis and to contain an iron carbide by its X-ray diffraction pattern, which exhibits plane spacings at 2.28Å, 2.20Å, 2.08Å, 2.05Å and 1.92Å. Such pattern corresponds to $Fe_5C_2$. The iron carbide component of the present material chiefly comprises $Fe_5C_2$, with $Fe_2C$, $Fe_{20}C_9$ ($Fe_{2.2}C$), $Fe_3C$, etc. present conjointly therewith in some cases. It is convenient to represent the iron carbide as $Fe_xC$ ($2 \leq x < 3$).

In the event of incomplete carbonization, the acicular particles obtained by the present process further contain an iron oxide component which is chiefly $Fe_3O_4$. With respect to iron oxides, FeO, $Fe_3O_4$ and

2

γ-Fe$_2$O$_3$ are generally related to one another in structure. The oxygen atoms in these three oxides are packed in a three-dimensional structure to the highest possible density, and the number of oxygen atoms in Fe$_3$O$_4$, actually present varies in an overall range covering the numbers of oxygen atoms in these oxides, so that it is suitable to represent the iron oxide in the acicular particles by FeO$_y$ (1 < y ≦ 1.5).

While the acicular particles prepared by the present process contain iron oxide in addition to the iron carbide component in most cases, the elementary analysis values of C, H and N indicate that the amount of carbon is usually in excess of that calculated from the chemical formula of the iron carbide identified by the X-ray diffraction pattern. It is not clear whether the excess of carbon is present as combined with iron or as free carbon. In this sense, it is probable that the acicular particles obtained by the present process contain elemental carbon. The particles obtained by the present process then include acicular particles at least 3 in average axial ratio with respect to their shape as primary particles and composed substantially of iron carbide alone or iron carbide and iron oxide and/or elemental carbon.

The iron carbide and iron oxide contents of the acicular particles obtained by the present process can be determined from the chemical formulae Fe$_5$C$_2$ and Fe$_3$O$_4$, which are confirmed as the main iron carbide and iron oxide components by X-ray diffraction analysis, the result of elementary analysis and the weight gain on ignition. The iron carbide content is preferably at least 20 wt%, more preferably at least 50 wt%. The iron oxide content is preferably up to 70 wt%, more preferably up to 40 wt%.

In the invention, the iron carbide contains Fe$_5$C$_2$ as a main component and contains preferably about 80 to 100% by weight of Fe$_5$C$_2$.

The acicular particles obtained by the present process are slightly smaller than but almost the same as the starting particles, namely γ-Fe$_2$O$_3$, in average axial ratio and average particle size. Accordingly the acicular particles prepared by the present process have an average axial ratio usually of at least 3, preferably 3 to 20, and an average particle size (long axis) usually of up to 5 μm, preferably 0.1 to 2 μm, most preferably 0.1 to 1.0 μm.

The acicular particles of the present invnetion containing iron carbide are useful as a magnetic material for magnetic recording as is apparent from the foregoing characteristics, etc., while the use thereof is not limited thereto. For exmaple, the acicular particlate material is usable as a catalyst for preparing lower aliphatic hydrocarbons from CO and H$_2$.

In the present invention, it is possible to produce particles having a high content of an iron carbide and excellent magnetic characteristics from an easily available γ-Fe$_2$O$_3$.

The invention will be described below in detail with reference to examples.

In the following examples, characteristics, etc. are determined by the methods described below.

(1) Magnetic characteristics.

Determined in the following method unless otherwise specified.

Coercive force Hc, saturation magnetization (σs, e.m.u.) and remanent magnetization (σr, e.m.u.) are measured in a magnetic field with a strength of 5 kOe, using a gauss meter equipped with a Hall-effect element and the sample with a packing ratio of 0.2.

(2) Elementary analysis for C, H and N.

The sample is subjected to elementary analysis in the conventional method using MT2 CHN CORDER Yanacao, product of Yanagimoto Mfg. Co., Ltd., with passage of oxygen (helium carrier) at 900°C.

(3) Determination of composition.

The composition of the product is calculated from the chemical formulae of iron oxide and iron carbide determined by X-ray diffractiometry, the elementary analysis value of C and the weight gain resulting from the following heat treatment. The calculation is conducted on the basis that Fe$_3$O$_4$, for example, changes into Fe$_2$O$_3$ having 1.035 times the weight of the former oxide and that Fe$_5$C$_2$ changes in to Fe$_2$O$_3$ having 1.317 times the weight of the carbide. The weight gain is determined in the conventional method of heat treatment, i.e. by placing the sample in a platinum crucible, then heating the sample in a muffle furnace at 600°C for 1 hour in the air and measuring the resulting weight gain after ascertaining the presence of α-Fe$_2$O$_3$ by X-ray diffraction.

Stated more specifically, it is assumed that the proportions of Fe$_5$C$_2$, Fe$_3$O$_4$ and elemental carbon are x, y and z wt%, respectively, and that the carbon analysis value and the weight gain are A and B wt%, respectively. The values x, y and z are then given by the following equations.

$$x + y + z = 100$$
$$1.317x + 1.035y = 100 + B$$
$$z + 0.079x = A.$$

Reference Example 1

α-FeOOH (3 g) was dehydrated at 600°C for 1 hour to prepare α-Fe$_2$O$_3$. The α-Fe$_2$O$_3$ was reduced with H$_2$ at 400°C for 1 hour and then oxidized in air at 350°C for 1 hour to obtain γ-Fe$_2$O$_3$. The γ-Fe$_2$O$_3$ was dispersed in 100 ml of 2% aqueous solution of sodium hydroxide with stirring at room temperature for 1 hour. The dispersion was filtered and dried to obtain an alkali treated γ-Fe$_2$O$_3$.

### Reference Example 2

α-FeOOH (3 g) was dispersed in 200 ml of an aqueous solution of sodium hydroxide with stirring at room temperature for 1 hour. The dispersion was filtered and dried. The resulting α-FeOOH was placed into a muffle furnace and heated at 300°C for 1 hour to give $\gamma$-Fe$_2$O$_3$.

The $\gamma$-Fe$_2$O$_3$ was dispersed in 100 ml of 2% aqueous solution of cobalt sulfate with stirring. Thereto added an aqueous solution of NaOH to adjust a pH to 10 and the mixture was stirred at 80°C for 30 minutes. The dispersion was filtered and dried to obtain $\gamma$-Fe$_2$O$_3$ coated with cobalt.

### Reference Example 3

α-FeOOH (3 g) was dehydrated at 600°C for 1 hour to prepare α-Fe$_2$O$_3$. The α-Fe$_2$O$_3$ was reduced with H$_2$ at 400°C for 1 hour and then oxidized in air at 350°C for 1 hour to obtain $\gamma$-Fe$_2$O$_3$. $\gamma$-Fe$_2$O$_3$ coated with cobalt was prepared in the same manner as in Reference Example 2 with use of the above $\gamma$-Fe$_2$O$_3$.

### Examples 1 to 5

Two grams of acicular $\gamma$-Fe$_2$O$_3$ particles treated with alkali or coated with cobalt, having an average particle size (long axis) and an average axial ratio listed in Table 1, were placed into a porcelain crucible, which was then inserted into a tubular furnace. After replacing the air in the furnace by nitrogen, the particles were heated to a prescribed temperature and kept at the temperature for a prescribed time while passing a gas at a flow rate, each listed in Table 1. The particles were thereafter allowed to cool to room temperature to obtain an acicular black powder.

The X-ray diffraction pattern of the product matched that of FE$_5$C$_2$ Iron Carbide on ASTM X-Ray Powder Data File 20—509. Table 2 shows the magnetic characteristics and compositions of the products.

## T a b l e   1

| Ex. | Starting material | | | Gas contacted | | Contact temp (°C) | Contact time (hr) |
|---|---|---|---|---|---|---|---|
| | kind | particle size(μm) | axial ratio | kind | flow rate (ml/min) | | |
| 1 | $\gamma$−Fe$_2$O$_3$ of Ref.Ex. 1 | 0.3 | 10 | CO | 500 | 350 | 3.0 |
| 2 | $\gamma$−Fe$_2$O$_3$ of Ref.Ex. 2 | 0.5 | 10 | CO | 500 | 350 | 5.0 |
| 3 | $\gamma$−Fe$_2$O$_3$ of Ref.Ex. 3 | 0.5 | 10 | CO | 500 | 360 | 3.0 |
| 4 | $\gamma$−Fe$_2$O$_3$ of Ref.Ex. 1 | 0.3 | 10 | CO/H$_2$ (1/3) | 500 | 350 | 2 |
| 5 | $\gamma$−Fe$_2$O$_3$ of Ref.Ex. 3 | 0.5 | 10 | CO/H$_2$ (1/3) | 500 | 360 | 2 |

4

## T a b l e   2

| Ex. | Product particle size($\mu$m) | axial ratio | Hc | $\sigma s$ | $\sigma r$ | $\sigma r / \sigma s$ | Composition (wt%) Fe$_3$O$_4$ | Fe$_5$C$_2$ | C |
|---|---|---|---|---|---|---|---|---|---|
| 1 | 0.3 | 9 | 835 | 77.3 | 45.6 | 0.59 | 10 | 78 | 12 |
| 2 | 0.5 | 9 | 876 | 79.1 | 46.7 | 0.59 | 8 | 82 | 10 |
| 3 | 0.5 | 8 | 792 | 73.5 | 43.3 | 0.59 | 9 | 76 | 15 |
| 4 | 0.3 | 9 | 910 | 79.3 | 47.7 | 0.60 | 2 | 85 | 13 |
| 5 | 0.5 | 8 | 832 | 80.1 | 43.8 | 0.55 | 2 | 87 | 11 |

**Claims**

1. A process for producing acicular particles containing an iron carbide which comprises: treating γ-Fe$_2$O$_3$ with an alkaline compound or coating it with a cobalt compound, and contacting the treated γ-Fe$_2$O$_3$ with CO or a mixture of CO and H$_2$ at a temperature of 250 to 400°C.

2. A process as defined in claim 1, wherein the alkali treatment comprises contacting γ-Fe$_2$O$_3$ with an aqueous solution of an alkaline compound, filtering and drying the resulting mixture.

3. A process as defined in claim 1 or 2, wherein the cobalt-coating is conducted by dispersing γ-Fe$_2$O$_3$ in an aqueous solution of a cobalt salt, rendering the dispersion alkaline by adding an aqueous solution of an alkali compound, filtering and drying the dispersion.


**Patentansprüche**

1. Verfahren zur Herstellung nadelförmiger Teilchen, die Eisencarbid enthalten, dadurch gekennzeichnet, daß γ-Fe$_2$O$_3$ mit einer alkalischen Verbindung behandelt oder mit einer Kobaltverbindung beschichtet wird, und das behandelte γ-Fe$_2$O$_3$ mit CO oder einer Mischung aus CO und H$_2$ bei einer Temperatur von 250 bis 400°C in Kontakt gebracht wird.

2. Verfahren nach Anspruch 1, worin die Alkalibehandlung umfaßt, daß γ-Fe$_2$O$_3$ mit einer wäßrigen Lösung einer alkalischen Verbindung in Kontakt gebracht und die resultierende Mischung filtriert und getrocknet wird.

3. Verfahren nach Anspruch 1 oder 2, worin die Beschichtung mit Kobalt ausgeführt wird durch Dispergieren von γ-Fe$_2$O$_3$ in einer wäßrigen Lösung eines Kobaltsalzes, Alkalischmachen der Dispersion durch Zugabe einer wäßrigen Lösung einer alkalischen Verbindung, Filtrieren und Trocknen der Dispersion.

**Revendications**

1. Procédé de production de particules aciculaires contenant un carbure der fer, caractérisé en ce qu'il comprend:
   le traitement de γ-Fe$_2$O$_3$ avec un composé alcalin ou l'enduction de celui-ci avec un composé du cobalt, et
   la mise en contact du γ-Fe$_2$O$_3$ traité avec du CO ou un mélange de CO et de H$_2$ à une température de 250 à 400°C.

2. Procédé suivant la revendication 1, caractérisé en ce que le traitement par un alcali comprend la mise en contact du γ-Fe$_2$O$_3$ avec une solution aqueuse d'un composé alcalin, la filtration et le séchage du mélange résultant.

3. Procédé suivant la revendications 1 ou 2, caractérisé en ce que l'enduction de cobalt est effectuée par dispersion de γ-Fe$_2$O$_3$ dans une solution aqueuse d'un sel de cobalt, alcanisation de la dispersion par addition d'une solution aqueuse d'un composé alcalin, filtration et séchage de la dispersion.